# EUROPEAN PATENT APPLICATION

(11) **EP 4 804 546 A1**
(43) Date of publication of application: **09.09.2026**
(21) Application number: 24886143.7
(22) Date of filing: 24.10.2024
(51) Int. Cl.: H04N 23/51, H04N 23/55, G03B 17/02, C25D 11/02, B23K 26/21

(54) **CAMERA MODULE**

(30) Priority: 30.10.2023 KR 20230147184
(71) Applicant: LG Innotek Co., Ltd., Seoul 07796 (KR)
(72) Inventor: WOO, Gyung Mok, Seoul 07796 (KR); PARK, Ok Hyeon, Seoul 07796 (KR); YOON, Kyeong Mok, Seoul 07796 (KR); KIM, Han Jun, Seoul 07796 (KR)
(74) Representative: Plasseraud IP
(86) International application number: PCT/KR2024/016347
(87) International publication number: WO 2025/095468

(57) **Abstract**

This camera module comprises: a front housing; a lens module coupled to the front housing; a substrate arranged below the lens module; and a bonding portion coupling the front housing to the lens module, wherein the lens module comprises: a barrel body which is partially arranged in the front housing; a lens arranged in the barrel body; and a flange protruding outward from the barrel body, and the front housing comprises: a first body; and a protrusion protruding from the upper surface of the first body. The flange is arranged in the protrusion, and the bonding portion is arranged between the flange and the protrusion.

## Description

### [Technical Field]

The present embodiment relates to a camera module.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

A camera may be equipped with a lens, a lens holder that accommodates the lens, an image sensor that converts an image of a subject collected in the lens into an electrical signal, and a printed circuit board on which the image sensor is mounted. A housing forming the outer appearance of the camera is formed with a structure in which the entire area is sealed to prevent internal components from being contaminated by foreign substances containing moisture.

### [Detailed Description of the Invention]

### [Technical Subject]

The present embodiment is intended to provide a camera module that can lower the manufacturing cost by reducing the number of parts and can firmly fix the lens module to the body.

### [Technical Solution]

A camera module according to the present embodiment comprises: a front housing, a lens module coupled to the front housing, a substrate disposed below the lens module, and a bonding portion coupling the front housing and the lens module, wherein the lens module includes a barrel body partially disposed within the front housing, a lens disposed within the barrel body, and a flange protruding outward from the barrel body, wherein the front housing includes a first body and a protrusion protruding from an upper surface of the first body, wherein the flange is disposed inside the protrusion, and wherein the bonding portion is disposed between the flange and the protrusion.

The upper surface of the flange, on which the bonding portion is disposed, may be disposed to be stepped lower than the upper surface of the protrusion.

A first gap separating the protrusion and the flange in a direction perpendicular to the optical axis direction is included, and the first gap may be disposed at a lower portion of the bonding portion.

A lower surface of the flange may be spaced apart from the upper surface of the first body in the optical axis direction.

The barrel body includes a surface-treated region through anodizing and a non-surface-treated region. A part of the upper surface of the flange and a side surface of the flange may be the non-surface-treated region.

The upper surface of the flange includes a third surface and a fourth surface disposed outside the third surface and coupled to the bonding portion. The third surface is disposed above the fourth surface, and the third surface may form the same plane as the upper surface of the protrusion.

A first chamfered surface is formed at an upper end of the protrusion where the bonding portion is formed, and a second chamfered surface may be formed at an upper end of the flange where the bonding portion is formed.

A length of the first gap in the optical axis direction may be 15% or less of a thickness of the first body.

The bonding portion may be a welding region.

### [Advantageous Effects]

According to the present embodiment, a coupling method by welding between the front housing and the lens module is used, so that means such as an adhesive or a sealing member for coupling are omitted, thereby having advantages of lowering manufacturing costs by reducing the number of parts and further simplifying the assembly process.

In addition, since the distance in the optical axis direction between the lens module and the substrate module can be precisely adjusted before the welding process, there is an advantage that an optimal resolution value within the camera module can be secured.

### [Brief Description of Drawings]

FIG. 1 is a perspective view illustrating an external appearance of a camera module according to an embodiment of the present invention.
FIG. 2 is an exploded perspective view of a camera module according to an embodiment of the present invention.
FIG. 3 is a cross-sectional view of a camera module according to an embodiment of the present invention.
FIG. 4 is a view illustrating an enlarged coupling structure of a lens module and a front housing according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due to another component being interposed between the components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as the optical axis direction of the lens. Meanwhile, the 'optical axis direction' may correspond to 'up-down direction', 'z-axis direction', and the like.

Hereinafter, the present invention will be described in more detail with reference to the attached drawings.

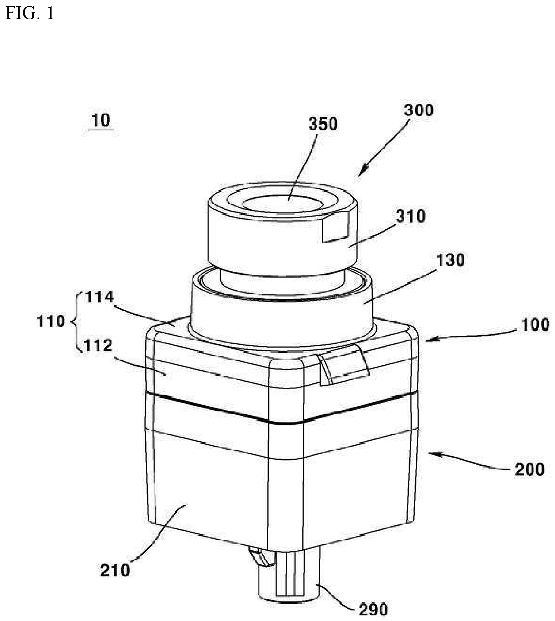

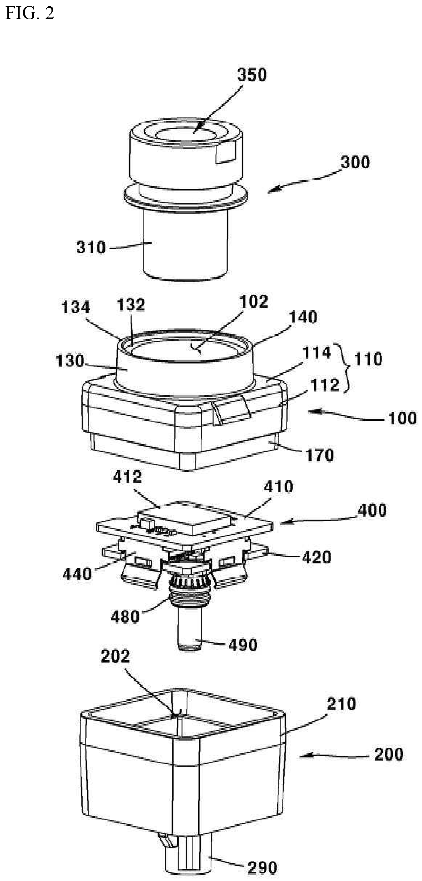

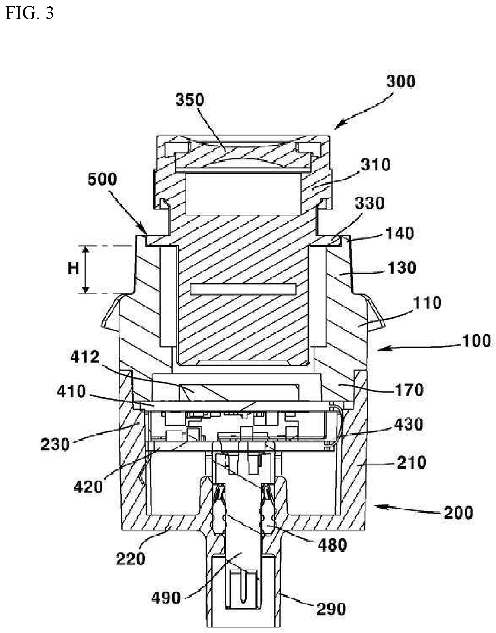

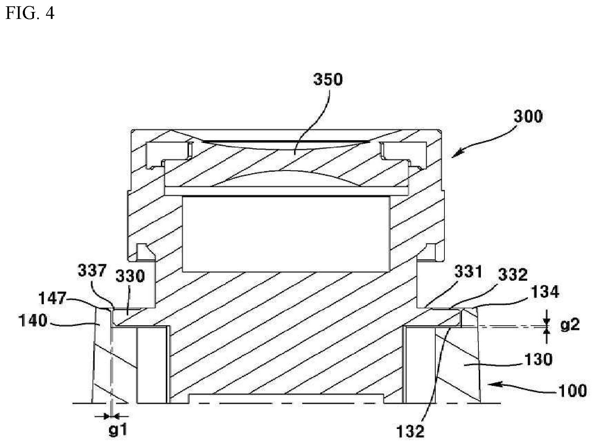

FIG. 1 is a perspective view illustrating an external appearance of a camera module according to an embodiment of the present invention; FIG. 2 is an exploded perspective view of a camera module according to an embodiment of the present invention; FIG. 3 is a cross-sectional view of a camera module according to an embodiment of the present invention; and FIG. 4 is a view illustrating an enlarged coupling structure of a lens module and a front housing according to an embodiment of the present invention.

Referring to FIGS. 1 to 4, a camera module **10** according to an embodiment of the present invention may be a camera module for a vehicle. The camera module **10** may be coupled to the vehicle. The camera module **10** may be used in at least one of a front camera, a side camera, a rear camera, and a black box for the vehicle. The camera module **10** may be disposed at the front of the vehicle. The camera module **10** may be disposed at the rear of the vehicle. The camera module **10** may be coupled to a wind glass of the vehicle. The camera module **10** may be coupled to the front or rear wind glass of the vehicle. The camera module **10** may be disposed at a side of the vehicle. The camera module **10** may capture a subject and output it as an image to a display (not shown).

The camera module **10** may include a front housing **100**. The front housing **100** may be referred to as any one among a front body, an upper housing, a first housing, and a front cover. The front housing **100**may include a second body **110**. The front housing **100** may include a first body **130**. The second body **110** and the first body **130** may be integrally formed.

The second body **110** may be formed of a metal material. The second body **110** may be disposed on a rear housing **200**, which will be described later. The second body **110** may be coupled to the rear housing **200**. A lower end of the second body **110** may be fixed to the rear housing **200**. The second body **110** may be coupled to the rear housing **200** by welding. Unlike this, the second body **110** may be coupled to the rear housing **200** by an adhesive or fusion. The second body **110** may be coupled to a substrate module **400**, which will be described later.

The second body **110** may be formed in a quadrangular shape with an open lower portion. At this time, corners of the second body **110** may be formed to be rounded. The second body **110** may include a top plate **114** and a first side plate **112** extending downward from an edge of the top plate **114**. The top plate **114** may be formed in a quadrangular shape. The top plate **114** may extend outward from a lower outer peripheral surface of the first body **130**. The first side plate **112** may extend downward from an outer edge of the top plate **114**. The first side plate **112** may be provided in plurality. The first side plate **112** may include four side plates. The first side plate **112** may be formed in a quadrangular plate shape. The first side plate **112** may include a **1-1** side plate, a **1-2** side plate, a **1-3** side plate disposed on an opposite side of the **1-1** side plate, and a **1-4** side plate disposed on an opposite side of the **1-2** side plate. The first side plate **112** may include **1-1** to **1-4** corners respectively disposed among the **1-1** to **1-4** side plates. Each of the **1-1** to **1-4** corners may include a rounded shape in at least a part thereof.

A space portion partitioned from other regions may be formed inside the second body **110**. The space portion may have an open lower portion, and an upper portion thereof may be covered by the lower surfaces of the first body **130** and the lens module **300**.

The second body **110** may include a first guide **170**. The first guide **170** may have a shape protruding downward from the lower surface of the top plate **114**. The first guide **170** may be in contact with the upper surface of the substrate module **400**. The lower surface of the first guide **170** may be in contact with the upper surface of the first substrate **410** within the substrate module **400**, which will be described later. A coupling region of the substrate module **400** may be guided in the space within the camera module **10** through the first guide **170**.

The front housing **100** may include a first body **130**. The first body **130** may be formed of a metal material. The first body **130** may have a circular cross-sectional shape. The first body **130** may be disposed on the second body **110**. The first body **130** may extend upward from the upper surface of the second body **110**. The first body **130** may be integrally formed with the second body **110**. As a modified embodiment, the first body **130** may be coupled to the second body **110**. In this case, the first body **130** may be fixed to the second body **110** by an adhesive. The first body **130** may accommodate the lens module **300** therein. A hole **102** to which the lens module **300** is coupled may be formed at the center of the first body **130**. The lens module **300** may be coupled to the hole **102** of the first body **130**.

The front housing **100** may include a protrusion **140**. The protrusion **140** may have a shape protruding upward from the upper surface of the front housing **100** further than other regions.

As shown in FIG. 2, the upper surface of the front housing **100** may include a first surface **132** and a second surface **134**. The first surface **132** may be the upper surface of the first body **130**. The second surface **134** may be the upper surface of the protrusion **140**. The first surface **132** and the second surface **134** may be disposed to be stepped in an up-and-down direction. The first surface **132** may be disposed above the second surface **134**. The first surface **132** may be disposed outside the second surface **134**.

Each of the first surface **132** and the second surface **134** may have a ringshaped cross-sectional shape.

A first chamfered surface **147** may be formed on an upper inner surface of the protrusion **140**. The first chamfered surface **147** may be formed to be inclined with respect to the upper surface and the inner surface of the protrusion **140** so as to connect the upper surface and the inner surface of the protrusion **140**. The first chamfered surface **147** may form an obtuse angle with each of the upper surface and the inner surface of the protrusion **140**.

Based on a direction perpendicular to the optical axis direction, a thickness of the protrusion **140** may be 1/4 or more of a thickness of the first body **130**.

At least a part of the outer surface of the front housing **100** may be surface-treated. At least a part of the outer surface of the front housing **100** may be anodized. The outer surface of the front housing **100** may include a surface-treated region, which is surface-treated through anodizing, and a non-surface-treated region, which is a region that is not surface-treated. The non-surface-treated region may be a region in which the material of the front housing **100** is exposed to the outside through the outer surface.

The front housing **100** may include a surface-treated region and a non-surface-treated region. A surface of the protrusion **140** facing a flange **330** of the lens module **300**, which will be described later, may be a non-surface-treated region. In more detail, an inner surface of the protrusion **140** facing the flange **330** in a direction perpendicular to the optical axis direction and the second surface **134**, which is the upper surface of the protrusion **140**, may be a non-surface-treated region. The remaining region of the surface of the front housing **100** other than the aforementioned non-surface-treated region may be a surface-treated region.

The camera module **10** may include a rear housing **200**. The rear housing **200** may be referred to as any one among a rear body, a lower housing, a second housing, and a rear cover. The rear housing **200** may be formed in a quadrangular shape with an open upper portion. The rear housing **200** may be formed of a metal material. The rear housing **200** may be disposed below the front housing **100**. The rear housing **200** may be coupled to the front housing **100**. The rear housing **200** may form an internal space through coupling with the front housing **100**. The rear housing **200** may include a space portion 202 in which an upper surface is open.

The rear housing **200** may include a bottom plate **220**. The bottom plate **220** may face the top plate **114** of the second body **110** of the front housing **100** in the optical axis direction. The bottom plate **220** may be spaced apart from the top plate **114** of the second body **110** in the optical axis direction. The bottom plate **220** may be parallel to the top plate **114** of the second body **110** of the front housing **100**. The bottom plate **220** may be formed in a quadrangular shape. At this time, corners of the bottom plate **220** may include a rounded shape in at least a part thereof.

The rear housing **200** may include a second side plate **210**. The second side plate **210** may extend from the bottom plate **220**. The second side plate **210** may extend upward from an outer edge of the bottom plate **220**. A shield member (not shown) may be disposed on the second side plate **210**. The shield member may be in surface contact with an inner surface of the second side plate **210**. An upper end of the second side plate **210** may be coupled to the front housing **100**. An upper surface of the second side plate **210** may be disposed to face a lower surface of the first side plate **112** in the optical axis direction. The upper surface of the second side plate **210** may be in contact with the lower surface of the first side plate **112**. The first side plate **112** and the second side plate **210** may be coupled to each other by at least one method among welding, an adhesive, and fusion. An outer surface of the second side plate **210** may be disposed on the same plane as an outer surface of the first side plate **112** of the front housing **100**.

The rear housing **200** may include a connector lead-out portion **290**. The connector lead-out portion **290** may have a shape protruding downward from the lower surface of the bottom plate **220**. A connector **490**, which will be described later, may be disposed inside the connector lead-out portion **290**. The connector lead-out portion **290** may be formed of a metal material. The connector lead-out portion **290** may have a hollow pipe shape therein.

A sealing member **480** is disposed between an inner surface of the connector lead-out portion **290** and an outer surface of the connector **490**, so that foreign substances from the outside can be prevented from flowing into the space within the camera module **10**.

The rear housing **200** may include a second guide **230**. The second guide **230** may have a shape protruding inward from the inner surface of the second side plate **210**. The space within the rear housing **200** may include a plurality of regions having different cross-sectional areas by the second guide **230**. As an example, a cross-sectional area of an upper region of the space within the rear housing **200** where the second guide **230** is not formed may be larger than a cross-sectional area of a lower region of the space within the rear housing **200** where the second guide **230** is formed. An upper surface of the second guide **230** may support a lower surface of the first substrate **410** of the substrate module **400**, which will be described later. The upper surface of the second guide **230** may be in contact with the lower surface of the first substrate **410**.

Like the front housing **100**, at least a part of the outer surface of the rear housing **200** may be surface-treated. At least a part of the outer surface of the rear housing **200** may be anodized.

The camera module **10** may include a lens module **300**. The lens module **300** may be coupled to the front housing **100**. The lens module **300** may be coupled to the hole **102** of the first body **130**. At least a part of the lens module **300** may be disposed inside the first body **130**, and the remaining part may be disposed to protrude upward from the front housing **100**.

The lens module **300** may include a barrel body **310** and one or more lenses **350** accommodated inside the barrel body **310**. The lens **350** may be disposed to face an image sensor **412** within a substrate module **400**, which will be described later, in the optical axis direction. The lens **350** may be optically aligned with the image sensor **412**. The lens **350** may be provided in plurality and disposed to be spaced apart from each other along the optical axis direction inside the barrel body **310**. An outermost lens among the plurality of lenses **350** may be exposed upward from the camera module **10**.

The barrel body **310** may include a space in which upper and lower surfaces are open inside. The lens **350** may be disposed in the space of the barrel body **310**. The barrel body **310** may include a plurality of regions having different cross-sectional areas. As an example, a region of the barrel body **310** disposed within the front housing **100** may have a smaller cross-sectional area than a region of the barrel body **310** protruding upward from the front housing **100**. The barrel body **310** may have a circular cross-sectional shape.

The barrel body **310** may be made of a metal material.

The barrel body **310** may include a flange **330**. The flange **330** may be disposed on an outer surface of the barrel body **310**. The flange **330** may have a shape protruding outward from the outer surface of the barrel body **310** further than other regions. The flange **330** may have a circular cross-sectional shape. When the lens module **300** is coupled to the front housing **100**, the flange **330** may be disposed on the first body **130** of the front housing **100**. A lower surface of the flange **330** may be disposed to face an upper surface of the first body **130** in the optical axis direction. An outer peripheral surface of the flange **330** may be disposed inside an outer peripheral surface of the first body **130**. A cross-sectional area of the flange **330** may be smaller than a cross-sectional area of the first body **130**.

In detail, the flange **330** may be disposed on the upper surface of the first body **130**. The flange **330** may be disposed on the first surface **132**. The flange **330** may be disposed inside the protrusion **140**. An outer surface of the flange **330** may be disposed to face an inner surface of the protrusion **140** in a direction perpendicular to the optical axis direction. The flange **330** may be disposed to overlap the protrusion **140** in the direction perpendicular to the optical axis direction.

As shown in FIG. 4, the upper surface of the flange **330** may include a third surface **331** and a fourth surface **332** disposed to be stepped in an up-and-down direction. The third surface **331** may be disposed above the fourth surface **332**. The fourth surface **332** may be disposed outside the third surface **331**. Based on a radial direction of the barrel body **310**, a length of the fourth surface **332** may be longer than a length of the third surface **331**. The third surface **331** may form the same plane as the upper surface of the protrusion **140**. The third surface **331** may form the same plane as the second surface **134**. The fourth surface **332** may be disposed below the upper surface of the protrusion **140**. The fourth surface **332** may be disposed below the second surface **134**.

Based on the optical axis direction, a thickness of the flange **330** corresponding to a region where the third surface **331** is disposed may be thicker than a thickness of the flange **330** corresponding to a region where the fourth surface **332** is disposed.

As shown in FIG. 4, a second chamfered surface **337** may be formed on an upper outer surface of the flange **330**. The second chamfered surface **337** may be disposed to face the first chamfered surface **147** in a direction perpendicular to the optical axis direction. The second chamfered surface **337** may be formed to be inclined with respect to the upper surface and a side surface of the flange **330** so as to connect the upper surface and the side surface of the flange **330**. The second chamfered surface **337** may form an obtuse angle with each of the upper surface and the side surface of the flange **330**.

A bonding portion **500**, which will be described later, may be disposed between the second chamfered surface **337** of the flange **330** and the first chamfered surface **147** of the front housing **100**. By the first chamfered surface **147** and the second chamfered surface **337**, a welding process for forming the bonding portion **500** may be more easily performed, and protrusion of the bonding portion **500** from the outer surface of the camera module **100** can be minimized.

At least a part of the outer surface of the barrel body **310** may be surface-treated. At least a part of the outer surface of the barrel body **310** may be anodized. The outer surface of the barrel body **310** may include a surface-treated region, which is surface-treated through anodizing, and a non-surface-treated region, which is a region that is not surface-treated. The non-surface-treated region may be a region in which the material of the barrel body **310** is exposed to the outside through the outer surface.

The barrel body **310** may include a surface-treated region and a non-surface-treated region. A side surface of the flange **330** facing the protrusion **140** of the front housing **100** in a direction perpendicular to the optical axis direction may be a non-surface-treated region. More specifically, the fourth surface **332** among the side surface of the flange **330** and the upper surface of the flange **330** may be a non-surface-treated region. The remaining region of the surface of the barrel body **310** other than the aforementioned non-surface-treated region may be a surface-treated region. The bonding portion **500** may be disposed only on the fourth surface **332**, which is the non-surface-treated region.

The camera module **10** may include a substrate module **400**. The substrate module **400** may be disposed in the space within the camera module **10**. The substrate module **400** may be disposed between the front housing **100** and the rear housing **200**.

The substrate module **400** may include a first substrate **410**, a second substrate **420**, a connection substrate **430**, and a shield can **440**.

The first substrate **410** may be a printed circuit board (PCB). An image sensor **412** may be disposed on the upper surface of the first substrate **410**. The image sensor **412** may be disposed on the first substrate **410** to face the lens module **300** in the optical axis direction. The upper surface of the first substrate **410** may be supported by the lower surface of the first guide **170** of the front housing **100**, and the lower surface of the first substrate **410** may be supported by the upper surface of the second guide **230** of the rear housing **200**. A cross-sectional area of the first substrate **410** may be larger than a cross-sectional area of the second substrate **420**.

The second substrate **420** may be a printed circuit board (PCB). The second substrate **420** may be disposed to be spaced apart from the first substrate **410** in the optical axis direction. The second substrate **420** may be disposed below the first substrate **410**. A connector **490** may be coupled to the lower surface of the second substrate **420**. An upper end of the connector **490** may be soldered to the lower surface of the second substrate **420**.

The second substrate **420** may be electrically connected to the first substrate **410**. The second substrate **420** and the first substrate **410** may be electrically connected through a connection substrate **430**. The connection substrate **430** may be a flexible printed circuit board (FPCB). Upper and lower ends of the connection substrate **430** may be coupled to the first substrate **410** and the second substrate **420**, respectively, to electrically connect the first substrate **410** and the second substrate **420**.

The shield can **440** is disposed between the first substrate **410** and the second substrate **420**, and may space the first substrate **410** and the second substrate **420** apart in the optical axis direction. The shield can **440** may be referred to as a spacer. The shield can **440** may include a fence portion (not shown) disposed between the first substrate **410** and the second substrate **420**, and a coupling portion (not shown) extending from the fence portion and coupled to the second substrate **420**. The coupling portion may include a hole. A protrusion for coupling with the hole may be disposed on a side surface of the second substrate **420**.

Hereinafter, a coupling structure of the front housing **100** and the lens module **300** will be described.

The front housing **100** and the lens module **300** may be coupled to each other by welding. The front housing **100** and the lens module **300** may be laser-welded.

The camera module **10** may include a bonding portion **500** (refer to FIG. 3) for coupling the front housing **100** and the lens module **300**. The bonding portion **500** may be referred to as a welding region. The bonding portion **500** may be disposed between the flange **330** and the protrusion **140**. The bonding portion **500** may be disposed between the first chamfered surface **147** and the second chamfered surface **337**. The bonding portion **500** may be disposed to cover the upper surface of the protrusion **140** and the fourth surface **332**. The bonding portion **500** may be disposed between the inner surface of the protrusion **140** and the side surface of the flange **330**.

The protrusion **140** and the flange **330** may be coupled to each other by the bonding portion **500**. The upper surface of the bonding portion **500** may protrude further upward than the fourth surface **332** or the upper surface of the protrusion **140**.

Since the upper surface and a part of the inner surface of the protrusion **140** are regions that are not surface-treated through anodizing, there is an advantage that a welding process with the flange **330** for forming the bonding portion **500** can be more easily performed. Similarly, since the side surface and a part of the upper surface of the flange **330** are also regions that are not surface-treated through anodizing, the welding process can be more easily performed.

As shown in FIG. 4, based on a direction perpendicular to the optical axis direction, at least a part of the side surface of the flange **330** and the inner surface of the protrusion **140** may be spaced apart in the direction perpendicular to the optical axis direction. A first gap **g1** may be formed between the side surface of the flange **330** and the inner surface of the protrusion **140**. The first gap **g1** may be disposed below the bonding portion **500**. A length of the first gap **g1** in the optical axis direction may be 15% or less of a thickness of the first body **130** based on the direction perpendicular to the optical axis direction.

A second gap **g2** may be formed between the lower surface of the flange **330** and the first surface **132**. The second gap **g2** may be a region spacing the lower surface of the flange **330** and the first surface **132** apart in the optical axis direction.

Through the first gap **g1** and the second gap **g2**, heat generated during a process of forming the bonding portion **500** can be minimized from being transferred to the lens **350**.

An outer surface of the barrel body **310** may be spaced apart from an inner surface of a space inside the front housing **100** in a direction perpendicular to the optical axis direction.

According to the structure as described above, means such as an adhesive for coupling or a sealing member are omitted through a coupling method by welding between the front housing and the lens module, so that there are advantages in that a manufacturing cost can be reduced due to a decrease in the number of parts and an assembly process can be further simplified.

In addition, since a distance in the optical axis direction between the lens module and the substrate module can be precisely adjusted before the welding process, there is an advantage in that an optimal resolution value within the camera module can be secured.

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A camera module comprising:
a front housing;
a lens module coupled to the front housing;
a substrate disposed below the lens module; and
a bonding portion coupling the front housing and the lens module,
wherein the lens module includes a barrel body partially disposed within the front housing, a lens disposed within the barrel body, and a flange protruding outward from the barrel body,
wherein the front housing includes a first body and a protrusion protruding from an upper surface of the first body,
wherein the flange is disposed inside the protrusion, and
wherein the bonding portion is disposed between the flange and the protrusion.

2. The camera module according to claim 1,
wherein an upper surface of the flange on which the bonding portion is disposed is positioned lower than an upper surface of the protrusion.

3. The camera module according to claim 1, comprising:
a first gap spacing the protrusion and the flange apart in a direction perpendicular to an optical axis direction,
wherein the first gap is disposed below the bonding portion.

4. The camera module according to claim 1,
wherein a lower surface of the flange is spaced apart from the upper surface of the first body in an optical axis direction.

5. The camera module according to claim 1,
wherein the barrel body includes a surface-treated region formed by anodizing and a non-surface-treated region, and
wherein at least a portion of the upper surface of the flange and a side surface of the flange is the non-surface-treated region.

6. The camera module according to claim 1,
wherein the front housing includes a surface-treated region formed by anodizing and a non-surface-treated region, and
wherein an upper surface and an inner surface of the protrusion constitute the non-surface-treated region.

7. The camera module according to claim 1,
wherein the upper surface of the flange includes a third surface and a fourth surface disposed outside the third surface and coupled to the bonding portion,
wherein the third surface is disposed higher than the fourth surface, and
wherein the third surface is coplanar with the upper surface of the protrusion.

8. The camera module according to claim 1,
wherein a first chamfered surface is formed on an upper end of the protrusion where the bonding portion is formed, and
wherein a second chamfered surface is formed on an upper end of the flange where the bonding portion is formed.

9. The camera module according to claim 3,
wherein a length of the first gap in the optical axis direction is 15% or less of a thickness of the first body.

10. The camera module according to claim 1,
wherein the bonding portion is a welding region.
